(19) Europäisches Patentamt
European Patent Office
Office européen des brevets

(11) Publication number: **0 442 607 A1**

# (12) EUROPEAN PATENT APPLICATION

(21) Application number: **91300274.7**

(22) Date of filing: **15.01.91**

(51) Int. Cl.5: **C09D 175/04**, C08J 7/04, C09D 7/12, G11B 5/704, //C08K5/521

(30) Priority: **08.02.90 GB 9002833**

(43) Date of publication of application: **21.08.91 Bulletin 91/34**

(84) Designated Contracting States: **AT BE CH DE FR GB IT LI LU NL**

(71) Applicant: **IMPERIAL CHEMICAL INDUSTRIES PLC**
**Imperial Chemical House, Millbank**
**London SW1P 3JF(GB)**

(72) Inventor: **Baba, Tsuyoshi**
**89 Thames Avenue**
**Guisborough, Cleveland(GB)**
Inventor: **Waldron, Roger**
**22 Sorrell Grove**
**Guisborough, Cleveland(GB)**

(74) Representative: **Rhind, John Lessels et al**
**Imperial Chemical Industries PLC Legal Department: Patents Po Box 6**
**Welwyn Garden City Herts, AL7 1HD(GB)**

## (54) Polymeric film.

(57) A primed film comprises a polymeric film substrate layer and an adherent layer comprising (a) a polyurethane resin which is the reaction product of (i) a polyfunctional organic isocyanate and (ii) a polymeric polyol, and (b) at least one phosphate ester of the formula:

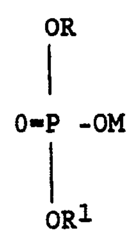

wherein

R is an unreactive hydrocarbon radical optionally containing unreactive substituents and having a total of not more than 10 carbon atoms;

$R^1$ is an unreactive hydrocarbon radical optionally containing unreactive substituents and having a total of not more than 10 carbon atoms or is alkali metal, ammonium, an amine cation, or hydrogen; and

M is alkali metal, ammonium, an amine cation, or hydrogen.

EP 0 442 607 A1

Fig. 1

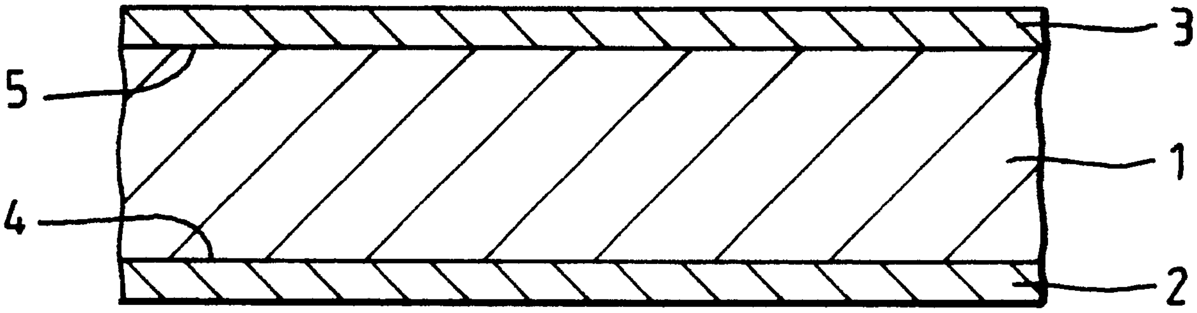

## POLYMERIC FILM

This invention relates to a primed polymeric film, and in particular to a product made therefrom.

The tendency of polymeric films to accumulate detrimental static electrical charges on surfaces thereof is well known. The presence of such charges creates a variety of problems including the attraction of dust and other contaminants to the film surface, the creation of a potential explosion hazard in the presence of organic solvents, difficulties in feeding the films through film handling and treating equipment, blocking, ie the adhesion of the film to itself or to other films, and the risk of fogging subsequently applied light-sensitive coating layers. Antistatic agents can be applied to a polymeric film from a suitable coating or priming composition, but the relatively high concentration at which such agents must be present to provide effective antistatic behaviour is usually such as will interfere with the adhesion promoting properties of the primer layer.

Polymeric films are often used with other materials, for example by coating or laminating polymeric films to form a laminate or composite which exhibits improved properties, compared to the component materials. It is well known in the art that many coating or adhesive compositions do not adhere well to various types of polymeric film. In addition, inks and lacquers do not generally adhere well to polymeric films. The adhesive property of polymeric base films can be improved by applying a primer layer of an adherent material which is more receptive to subsequently applied coating layers.

There is a particular need to provide a primer layer which is receptive to both a graphics layer and a magnetic layer, for example in the production of a magnetic card, such as a credit card, and in particular a "pre-paid card", eg a telephone card, and an "intelligent card", which is, for example, capable of storing information relating to a number of financial transactions. A magnetic card generally comprises (i) a magnetic layer, for storing the relevant information, (ii) a plastic film substrate layer, for example polyethylene terephthalate, and (iii) a graphics layer or printing layer, which provides visual information, such as the type of card, owner etc. A range of conventional binders may be used for the magnetic coating materials, which are well-known to the man skilled in the art. A wide range of inks and lacquers may be used in the graphics layer, such as aqueous and organic solvent-based materials, particularly electron beam- and UV-curable inks.

We have now devised a polymeric film primed with an adherent layer which exhibits antistatic properties and improved adhesion between the primed polymeric film and with subsequently applied additional layers.

Accordingly, the present invention provides a primed film comprising a polymeric film substrate layer having on at least one surface thereof an adherent layer comprising (a) a polyurethane resin which is the reaction product of (i) a polyfunctional organic isocyanate and (ii) a polymeric polyol, and (b) at least one phosphate ester of the formula:

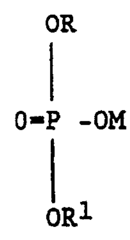

wherein

R is an unreactive hydrocarbon radical optionally containing unreactive substituents and having a total of not more than 10 carbon atoms;

$R^1$ is an unreactive hydrocarbon radical optionally containing unreactive substituents and having a total of not more than 10 carbon atoms or is alkali metal, ammonium, an amine cation, or hydrogen; and

M is alkali metal, ammonium, an amine cation, or hydrogen.

The invention also provides a method of producing a primed film by forming a substrate layer of polymeric material, and applying to at least one surface thereof an adherent layer comprising (a) a polyurethane resin which is the reaction product of (i) a polyfunctional organic isocyanate and (ii) a polymeric polyol, and (b) at least one phosphate ester of the formula:

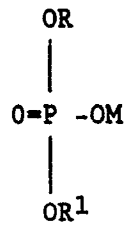

wherein

R is an unreactive hydrocarbon radical optionally containing unreactive substituents and having a total of not more than 10 carbon atoms;

R' is an unreactive hydrocarbon radical optionally containing unreactive substituents and having a total of not more than 10 carbon atoms or is alkali metal, ammonium, an amine cation, or hydrogen; and

M is alkali metal, ammonium, an amine cation, or hydrogen.

The invention also provides a magnetic card comprising a primed film as herein described, or produced as herein described, associated with a magnetic layer and a graphics layer.

The polyfunctional organic isocyanate of component (a) of the polyurethane resin may be a cycloaliphatic, araliphatic, aromatic or preferably an aliphatic polyisocyanate. Examples of suitable polyfunctional isocyanates include ethylene diisocyanate, 1,6-hexamethylene diisocyanate, isophorone diisocyanate, cyclohexane-1,4-diisocyanate,
4-4'-dicyclohexylmethane diisocyanate, p-xylylene diisocyanate, 1,4-phenylene diisocyanate, 2,4-toluene diisocyanate, 2,6-toluene diisocyanate, 4,4'-diphenylmethane diisocyanate, 2,4'-diphenylmethane diisocyanate, polymethylene polyphenyl polyisocyanates and 1,5-naphthylene diisocyanate. 1,6-hexamethylene diisocyanate is particularly preferred. Mixtures of polyfunctional isocyanates may be used and also polyfunctional isocyanates which have been modified by the introduction of urethane, allophanate, urea, biuret, carbodiimide, uretonimine or isocyanurate residues.

The polymeric polyol component of the polyurethane resin may be a member of any of the chemical classes of polymeric polyols used or proposed to be used in polyurethane formulations. For example, the polymeric polyol may be a polycarbonate, polyesteramide, polyether, polythioether, polyacetal or polyolefin, but preferably a polyester.

The polyester suitably comprises a copolyester, preferably derived from one or more, preferably aromatic, polycarboxylic acids and one or more polyhydric alcohols.

Suitable aromatic polycarboxylic acids for incorporation into the polyester portion of the polyurethane resin include phthalic acid, isophthalic acid and terephthalic acid, or the acid anhydrides or lower-alkyl (up to 10 carbon atoms) esters thereof. Mixtures of two or more thereof, particularly those containing a predominant amount (>50 mole %) of terephthalic acid and/or isophthalic acid may also be employed. The aromatic dicarboxylic acid components may be present in an amount greater than 50 mole %, and preferably greater than 80 mole %, of the total acidic components of the polyester.

The polyester may comprise at least one aliphatic or cycloaliphatic dicarboxylic acid, such as cyclohexane-1,4-dicarboxylic acid, adipic acid, sebacic acid, trimellitic acid and/or itaconic acid, and/or polyester-forming equivalents thereof. Adipic acid is particularly preferred. The aliphatic or cycloaliphatic dicarboxylic acid components may be present in an amount of up to about 30 mole %, preferably from 0 to 10 mole %, of the total acidic components of the polyester.

The polyester may additionally comprise a sulphonated polycarboxylic acid, for example, the ammonium and alkali metal, particularly sodium, salts of 4-sulphophthalic acid, 5-sulpho-isophthalic acid and sulphoterephthalic acid, or the acid anhydrides or lower alkyl (up to 10 carbon atoms) esters thereof. Such acids, or derivatives, are available as alkali metal salts, particularly the sodium sulphonate salt, and are conveniently incorporated in salt form into the polyester portion of the polyurethane resin. The concentration of the sulphonic acid component is preferably present in a concentration of from 0 to 20 mole %, particularly from 1 to 10 mole %, of the total acidic components of the polyester.

Suitable polyhydric alcohols for incorporation into the polyester include aliphatic, cycloaliphatic and aromatic alkylene glycols, such as ethylene glycol, 1,2-propylene glycol, neopentyl glycol, cyclohexane-1,4-dimethanol and 1,3-propane diol, and particularly aliphatic alkylene-oxy-glycols, such as ethylene glycol and diethylene glycol. Mixtures of two or more thereof, particularly those containing a predominant amount (>50 mole %) of ethylene glycol and/or diethylene glycol may also be employed. The polyhydric alcohol is present in a stoichiometrically equivalent amount of approximately 100 mole %.

If desired, the polyester may be modified by the inclusion therein of one or more monohydric alcohols, such as ethylene glycol monobutyl ether, benzyl alcohol and cyclohexanol.

A preferred polyester for incorporation into the polyurethane resin of component (a) comprises residues of terephthalic acid, isophthalic acid, ethylene glycol, diethylene glycol and optionally a sulphonated polycarboxylic acid. Adipic acid may also be included in the polyester component.

Preferably, the polymeric polyol is of low molecular weight, particularly from about 450 to 9000, and particularly from about 900 to 4500.

If desired, the polyurethane resin may also comprise one or more compounds containing a plurality of isocyanate-reactive groups. A suitable additional isocyanate-reactive compound comprises an organic polyol, particularly a short chain aliphatic polyol, preferably neopentyl glycol. An organic diamine, particularly an aliphatic diamine, may also be included either independently or together with the organic polyol.

If desired, a catalyst for urethane formation, such as dibutyltin dilaurate and/or stannous octoate may be used to assist formation of the resin, and a non-reactive solvent may be added before or after formation of the medium to control viscosity. Suitable non-reactive solvents which may be used include acetone, methylethylketone, dimethylformamide, ethylene carbonate, propylene carbonate, diglyme, N-methylpyrrolidone, ethyl acetate, ethylene and propylene glycol diacetates, alkyl ethers of ethylene and propylene glycol monoacetates, toluene, xylene and sterically hindered alcohols such as t-butanol and diacetone alcohol. The preferred solvents are water-miscible solvents such as N-methylpyrrolidone, dimethyl sulphoxide and dialkyl ethers of glycol acetates or mixtures of N-methylpyrrolidone and methyl ethyl ketone. Other suitable solvents include vinyl monomers which are subsequently polymerised.

The polyurethane resins of the invention are water dispersible, and a medium comprising an aqueous polyurethane dispersion may be prepared by dispersing the water dispersible, polyurethane resin in an aqueous medium, preferably in the presence of an effective amount of a polyfunctional active hydrogen-containing chain extender.

The resin may be dispersed in water using techniques well known in the art. Preferably, the resin is added to the water with agitation or, alternatively, water may be stirred into the resin.

The polyfunctional active hydrogen-containing chain extender, if employed, is preferably water-soluble, and water itself may be effective. Other suitable extenders include a polyol, an amino alcohol, ammonia, a primary or secondary aliphatic, alicyclic, aromatic, araliphatic or heterocyclic amine especially a diamine, hydrazine or a substituted hydrazine.

Examples of suitable chain extenders useful herein include ethylene diamine, diethylene triamine, triethylene tetramine, propylene diamine, butylene diamine, hexamethylene diamine, cyclohexylene diamine, piperazine, 2-methyl piperazine, phenylene diamine, tolylene diamine, xylylene diamine, tris (2-aminoethyl) amine,
3,3' -dinitrobenzidine,
4,4'-methylenebis(2-chloroaniline),
3,3'-dichloro-4,4'bi-phenyl diamine,
2,6-diaminopyridine, 4,4'-diaminodiphenylmethane,
menthane diamine, m-xylene diamine, isophorone diamine,
and adducts of diethylene triamine with acrylate or its hydrolyzed products. Also materials such as hydrazine, azines such as acetone azine, substituted hydrazines such as, for example, dimethyl hydrazine,
1,6-hexamethylene-bis-hydrazine, carbodihydrazine, hydrazides of dicarboxylic acids and sulfonic acids such as adipic acid mono- or dihydrazide, oxalic acid dihydrazide, isophthalic acid dihydrazide, tartaric acid dihydrazide, 1,3-phenylene disulfonic acid dihydrazide, omega-amino-caproic acid dihydrazide, hydrazides made by reacting lactones with hydrazines such as gamma-hydroxylbutyric hydrazide, bis-semi-carbazide, bis-hydrazide carbonic esters of glycols such as any of the glycols mentioned above.

Where the chain extender is other than water, for example a diamine or hydrazine, it may be added to the aqueous dispersion of polyurethane resin or, alternatively, it may already be present in the aqueous medium when the resin is dispersed therein.

Desirably, the polyfunctional chain extender should be capable of intra-molecular cross-linking, to improve durability and resistance to solvents. Suitable resinous intra-molecular cross-linking agents comprise epoxy resins, alkyd resins and/or condensation products of an amine, eg melamine, diazine, urea, cyclic ethylene urea, cyclic propylene urea, thiourea, cyclic ethylene thiourea, alkyl melamines, aryl melamines, benzo guanamines, guanamines, alkyl guanamines and aryl guanamines with an aldehyde, eg formaldehyde. A useful condensation product is that of melamine with formaldehyde. The condensation product may optionally be partially or totally alkoxylated, the alkoxy group preferably being of low molecular weight, such as methoxy, ethoxy, n-butoxy or iso-butoxy. A hexamethoxymethyl melamine condensate is particularly suitable. Another particularly suitable cross-linking agent is a polyaziridine.

Such polyfunctional extenders preferably exhibit at least trifunctionality (ie three functional groups) to promote inter-molecular cross-linking with the functional groups present in the polyurethane resin and improve adhesion of the release medium layer to the receiving layer.

The chain extension may be conducted at elevated, reduced or ambient temperatures. Convenient temperatures are from about 5° to 95° C or more, preferably from about 10° to about 45° C.

The amount of chain extender employed should be approximately equivalent to the free-NCO groups in the resin, the ratio of active hydrogens in the chain extender to NCO groups in the resin preferably being in the range from 1.0 to 2.0:1.

If desired, and preferably, the antistatic adherent layer may be cross-linked to improve its durability, hardness, cohesive strength and adhesion to the substrate, and to provide resistance to attack by solvents. Cross-linking may be promoted by incorporation into the antistatic adherent composition of any cross-linking agent known to be effective in polyurethanes. Suitable cross-linking agents include the condensation product of an amine with an aldehyde. For example, melamine, diazine, urea, cyclic propylene urea, thiourea, cyclic ethylene thiourea, an alkyl melamine, such as butyl melamine, an aryl melamine, a guanamine, an alkylguansmine, an aryl guanamine, a benzoguanamine, or glycoluril, may be condensed with an aldehyde, such as formaldehyde. The condensation product is preferably alkoxylated, eg ethoxylated. A preferred cross-linking agent is a methylated melamine-formaldehyde resin.

The amount of cross-linking agent necessary to promote the required degree of cross-linking may be readily determined by simple experimentation. In general, the cross-linking agent suitably comprises up to 20%, and preferably from 2 to 10%, by weight of the total components of the antistatic adherent composition.

Acceleration of the cross-linking may be effected, if desired, by adding a suitable catalyst to the antistatic adherent composition. A preferred catalyst for use with an amine-formaldehyde cross-linking agent comprises ammonium chloride, ammonium nitrate, phosphoric acid, citric acid, p-toluene sulphonic acid or p-dodecylbenzenesulphonic acid.

The phosphate ester of component (b) may be added to aqueous coating compositions such as aqueous latices of component (a) without causing the polyurethane resin to coagulate or interfering with its film-forming properties. The phosphate esters may also be subjected to the temperatures which are normally applied to the film after application of the coating composition for instance for orientation and possibly heat setting without volatilisation, decomposition, absorption into the thermoplastics film or chemical reaction with the film or the polyurethane component of the coating composition.

Each of R and $R^1$ in the defined phosphate ester structure of component (b) preferably comprises at least 2 carbon atoms and preferably not more than 7 carbon atoms. R and $R^1$ may each, for example, represent an alkyl group containing up to 7 carbon atoms, an aryl or substituted aryl group or an aralkyl group. Preferred alkyl groups for use as R and $R^1$ preferably comprise 1 to 5 carbon atoms and are most preferably selected from ethyl, n-propyl, iso-propyl, n-butyl, iso-butyl and tert-butyl, the preferred aryl or substituted aryl groups for use as R and $R^1$ are phenyl which may be substituted with one or more alkyl groups containing up to 10 carbon atoms (especially methyl) and/or one or more halogen (especially chlorine) atoms, and the preferred aralkyl group is benzyl. Long chain alkyl groups containing more than 7 carbon atoms, if present as R and $R^1$, tend to modify undesirably the coating and film-forming properties of the coating composition thereby resulting in coating quality defects such as non-uniformities and streaks.

If $R^*$ is an alkali metal it is preferably potassium or sodium.

In the above defined phosphate ester structures which contain both R and $R^1$ groups as hydrocarbon radicals, these groups may be the same or different.

If M is an alkali metal it is preferably potassium or sodium.

Antistatic properties are provided by the presence in the coating layer of the phosphate ester which may comprise one compound or a mixture of two or more compounds chosen from the structures defined above. Such esters may be present in the free acid form or in the partially or completely neutralised forms as sodium or potassium salts. The phosphate ester employed in the coating composition may comprise one or more of the defined phosphate esters, for example, those selected from the salts of monoalkyl acid esters, dialkyl acid esters, monoaryl acid esters, diaryl acid esters and alkyl aryl acid esters.

Butyl phosphate ester salts have been found to provide a particularly effective balance of properties. Such salts may be derived from dibutyl hydrogen phosphate or butyl dihydrogen phosphate or a mixture thereof.

Component (b) preferably comprises an additional phosphate ester to those described above, wherein R and/or $R^1$ comprise a polyether block preferably formed from one or more polyether glycols, particularly containing from 2 to 4 carbon atoms between ether groups; for example polypropylene glycol, and especially polyethylene glycol. Butyl polyethylene glycol and/or oleyl polyethylene glycol are particularly

suitable as R and/or $R^1$ groups, especially when the polyethylene glycol component comprises 5 to 15, preferably 7 to 9 ethylene glycol units.

A preferred phosphate ester mixture of component (b) comprises dibutyl phosphate ester : monobutyl phosphate ester : monobutyl poly(8)ethylene glycol, monooleyl poly(8)ethylene glycol phosphate ester, preferably in a ratio of 8.0 to 1.0 : 0.5 to 1.0 : 0.5 to 1.0, and especially an approximate ratio of 4.7 : 1.2 : 1.0.

Amounts of the phosphate ester, expressed as the weight of the corresponding unneutralised acid phosphate ester and based upon the weight of polyurethane in the coating composition, are preferably in the range 12.5 to 100%, and more preferably 50 to 75% by weight, and provide effective antistatic properties in dried coating layers having a thickness in the range 0.01 to 1.0 $\mu$m, preferably 0.01 to 0.5 $\mu$m, after completion of the molecular orientation of the thermoplastics film by stretching.

Coating layers comprising partial salts of an acidic phosphate ester (ie incompletely neutralised materials), especially of an acidic alkyl phosphate ester, exhibit a useful combination of antistatic properties, coat quality and adhesion to superimposed layers. Partial salts may be obtained by partially neutralising the acidic alkyl phosphate ester, eg with potassium hydroxide or sodium hydroxide, in an aqueous medium. When the polyurethane component of the coating composition is cross-linkable in the presence of an acidic alkyl phosphate ester, a satisfactory combination of properties can be obtained when the aqueous partially neutralised acidic phosphate ester, preferably an alkyl phosphate ester, has a pH in the range 1.7 to 8.0 (in the absence of any other materials that might influence pH) prior to addition to the polyurethane component. At a pH less than 1.7 the amount of potassium or sodium ion in the partial salt is generally insufficient to provide a substantial reduction in surface resistivity although the antistatic properties are modified to the extent that the propensity to accumulate electrostatic charges is reduced especially at relative humidities of at least 30% at 20°C. The cross-linking activity of cross-linkable polyurethanes and cross-linkable agents, namely cross-linking agents which cross-link under acidic conditions such as amine/aldehyde condensation products, may be adversely inhibited above pH 8.0, thereby diminishing the adhesion of coating layer to the film. The preferred range of pH for aqueous salts of acidic phosphate esters, eg of acid alkyl phosphate esters, prior to their addition to a cross-linkable polyurethane and, if employed, a cross-linking agent, which may be required to promote the adhesion between the coating layer and the film, is less than 8 and especially 1.7 to 5. It will be appreciated that coating polyurethanes which are not cross-linked, or do not require to be cross-linked under acidic conditions, may be used in conjunction with added aqueous partial phosphate ester salts having a pH exceeding 8.0 since the resulting antistatic properties are very satisfactory.

It will be appreciated that the aqueous or organic medium of the coating composition is normally dried at the temperatures applied to the coated film for stretching and/or heat setting. When a cross-linkable composition is employed, the cross-linking reaction also occurs at this stage although predominantly during heat setting because the rate of cross-linking is more rapid at the heat-setting temperatures which are higher than those used for stretching. As indicated above, the cross-linking of certain cross-linkable coating compositions is inhibited when the added aqueous acidic alkyl phosphate esters have a pH exceeding 8.0. Aqueous cross-linkable compositions whose cross-linking activity has been found to be inhibited at a pH exceeding 8.0 comprise those cross-linkable compositions described above which include a polyurethane containing cross-linkable functional groups and a condensation product of an amine and an aldehyde. The cross-linking activity of such a composition by reaction between the condensation product with the cross-linkable functional groups of the polymer and the self cross-linking action of the condensation product itself is accelerated to an acceptable rate when catalyst under acidic conditions. The addition of an aqueous partial salt of an acidic alkyl phosphate ester having a pH in the preferred range 1.7 to 5 to such a cross-linkable composition establishes the desired acidic conditions for cross-linking without necessitating the addition of a special cross-linking catalyst. However, an adverse consequence of this effect is that premature cross-linking of the composition leading to coagulation and hence difficulties in coating has been observed. This instability of the coating composition could be avoided by the addition of a highly, eg more than 90%, neutralised acidic phosphate ester, thereby providing a highly alkaline latex and the inclusion of an additional cross-linking catalyst. However, this is generally impracticable since excessive amounts of catalyst would be required to compensate for relatively high amounts of phosphate ester, which are preferably in the range 12.5 to 100%, and especially 50 to 75% by weight based upon the weight of the polyester.

It has been discovered that the instability of aqueous cross-linkable coating compositions can be avoided by maintaining a pH exceeding 7 until the composition has been applied to the film and preferably until molecular orientation by stretching has been completed. Therefore, according to a preferred embodiment of the invention stabilisation against premature cross-linking is achieved by rendering the aqueous

phosphate ester salt alkaline, preferably to a pH in the range 7.5 to 10, by treatment with a volatile base prior to the addition of the other components of the coating composition, namely the cross-linkable components such as a cross-linkable polyurethane and the cross-linking condensation product. The base is chosen to be volatile at the temperatures prevailing during the stretching and/or, if employed, heat-setting steps after the application of the coating latex, eg ammonium hydroxide, triethylamine or morpholine. Volatilisation of the base at the stretching and/or heat-setting temperatures restores the desired acidic conditions for cross-linking thereby enabling the cross-linking reaction to proceed.

The relative proportions of the respective components of the antistatic adherent layer may vary within a wide range, and desirably should be selected by simple experimentation to provide an antistatic layer which confers upon the film a Surface Resistivity not exceeding 12, and preferably less than 10.5 log ohms/square at 50% relative humidity.

The adherent layer may be formed on a surface of the substrate by conventional techniques - for example, it is preferred, particularly in the case of a polyester film whose formation requires relatively high extrusion temperatures, to deposit the antistatic adherent layer directly onto at least one surface of a preformed film substrate from a solution or dispersion in a suitable volatile medium - preferably, for economy and ease of application, from an aqueous medium. Application from an aqueous medium is economically advantageous, avoids the potential explosive and toxicity hazards associated with the use of volatile organic solvents, and eliminates the problem of residual odour frequently encountered when an organic solvent is employed.

To achieve good wetting and levelling properties of the aqueous adherent composition on a polymeric film substrate, it is desirable that the surface energy of the aqueous composition is less than that of the film substrate.

Suitable reduction in surface tension can be achieved by the addition of one or more surfactants to the aqueous adherent composition. Suitable surfactants include alkylbenzene sulphonates, sodium alkyl sulphosuccinates, alcohol ethoxylates, and ethoxylated alkyl, eg nonyl, phenols. Fluorinated surfactants are particularly preferred.

Deposition of the aqueous solution or dispersion of the adherent composition onto the polymeric substrate layer is effected by a conventional film coating technique - for example, by gravure roll coating, reverse roll coating, dip coating, bead coating, slot coating or electrostatic spray coating. The solution or dispersion is suitably applied in an amount such that the thickness of the adherent layer when dried, for example - by heating the coated substrate, will provide an effective bond to any subsequently applied additional layer. Conveniently, the thickness of the dried, adherent layer is of the order of 1 µm, or less, and preferably in a range of from 10 to 100 nanometres (nm).

The concentration of components (a) and (b) in the liquid coating medium depends, inter alia, on the level of antistatic properties required in the treated film, and on the wet thickness of the applied coating layer, but an effective amount conveniently comprises from about 0.5 to about 10%, preferably from 1 to 5% (weight/volume).

A substrate for use in a primed polymeric film according to the invention may be formed from any suitable film-forming, polymeric material. Thermoplastics materials are preferred, and include a homopolymer or copolymer of a 1-olefin, such as ethylene, propylene and but-1-ene, a polyamide, a polycarbonate, and particularly a synthetic linear polyester which may be obtained by condensing one or more dicarboxylic acids or their lower alkyl (up to 6 carbon atoms) diesters, eg terephthalic acid, isophthalic acid, phthalic acid, 2,5-, 2,6- or 2,7-naphthalenedicarboxylic acid, succinic acid, sebacic acid, adipic acid, azelaic acid, 4,4'-diphenyldicarboxylic acid, hexahydro-terephthalic acid or 1,2-bis-p-carboxyphenoxyethane (optionally with a monocarboxylic acid, such as pivalic acid) with one or more glycols, particularly an aliphatic glycol, eg ethylene glycol, 1,3-propanediol, 1,4-butanediol, neopentyl glycol and 1,4-cyclohexanedimethanol. A polyethylene terephthalate film is particularly preferred, especially such a film which has been biaxially oriented by sequential stretching in two mutually perpendicular directions, typically at a temperature in the range 70 to 125 °C, and preferably heat set, typically at a temperature in the range 150 to 250 °C, for example - as described in British patent GB-A-838708.

The substrate may also comprise a polyarylether or thio analogue thereof, particularly a polyaryletherketone, polyarylethersulphone, polyaryletheretherketone, polyaryletherethersulphone, or a copolymer or thioanalogue thereof. Examples of these polymers are disclosed in EP-A-1879, EP-A-184458 and US-A-4008203, particularly suitable materials being those sold by ICI PLC under the Registered Trade Mark STABAR. Blends of these polymers may also be employed.

Suitable thermoset resin substrate materials include addition - polymerisation resins - such as acrylics, vinyls, bis-maleimides and unsaturated polyesters, formaldehyde condensate resins - such as condensates with urea, melamine or phenols, cyanate resins, functionalised polyesters, polyamides or polyimides.

The polymeric film substrate for production of a primed film according to the invention may be unoriented, or uniaxially oriented, but is preferably biaxially oriented by drawing in two mutually perpendicular directions in the plane of the film to achieve a satisfactory combination of mechanical and physical properties. Simultaneous biaxial orientation may be effected by extruding a thermoplastics polymeric tube which is subsequently quenched, reheated and then expanded by internal gas pressure to induce transverse orientation, and withdrawn at a rate which will induce longitudinal orientation. Sequential stretching may be effected in a stenter process by extruding the thermoplastics substrate material as a flat extrudate which is subsequently stretched first in one direction and then in the other mutually perpendicular direction. Generally, it is preferred to stretch firstly in the longitudinal direction, ie the forward direction through the film stretching machine, and then in the transverse direction. A stretched substrate film may be, and preferably is, dimensionally stabilised by heat-setting under dimensional restraint at a temperature above the glass transition temperature thereof.

In a preferred embodiment of the invention, the primed film comprises an opaque substrate. Opacity depends, inter alia, on the film thickness and filler content, but an opaque substrate film will preferably exhibit a Transmission Optical Density (Sakura Densitometer; type PDA 65; transmission mode) of from 0.75 to 1.75, and particularly of from 1.2 to 1.5.

A film substrate is conveniently rendered opaque by incorporation into the film-forming synthetic polymer of an effective amount of an opacifying agent. However, in a further preferred embodiment of the invention the opaque substrate is voided, ie comprises a cellular structure containing at least a proportion of discrete closed cells. It is therefore preferred to incorporate into the polymer an effective amount of an agent which is capable of generating an opaque, voided substrate structure. Suitable voiding agents, which also confer opacity, include an incompatible resin filler, a particulate inorganic filler or a mixture of two or more such fillers.

By an "incompatible resin" is meant a resin which either does not melt, or which is substantially immiscible with the polymer, at the highest temperature encountered during extrusion and fabrication of the film. Such resins include polyamides and olefin polymers, particularly a homo- or co-polymer of a mono-alpha-olefin containing up to 6 carbon atoms in its molecule, for incorporation into polyester films, or polyesters of the kind hereinbefore described for incorporation into polyolefin films.

Particulate inorganic fillers suitable for generating an opaque, voided substrate include conventional inorganic pigments and fillers, and particularly metal or metalloid oxides, such as alumina, silica and titania, and alkaline earth metal salts, such as the carbonates and sulphates of calcium and barium. Barium sulphate is a particularly preferred filler which also functions as a voiding agent.

Suitable fillers may be homogeneous and consist essentially of a single filler material or compound, such as titanium dioxide or barium sulphate alone. Alternatively, at least a proportion of the filler may be heterogeneous, the primary filler material being associated with an additional modifying component. For example, the primary filler particle may be treated with a surface modifier, such as a pigment, soap, surfactant, coupling agent or other modifier to promote or alter the degree to which the filler is compatible with the substrate polymer.

Production of a substrate having satisfactory degrees of opacity, voiding and whiteness requires that the filler should be finely-divided, and the average particle size thereof is desirably from 0.1 to 10 µm provided that the actual particle size of 99.9% by number of the particles does not exceed 30 µm. Preferably, the filler has an average particle size of from 0.1 to 1.0 µm, and particularly preferably from 0.2 to 0.75 µm. Decreasing the particle size improves the gloss of the substrate.

Particle sizes may be measured by electron microscope, coulter counter or sedimentation analysis and the average particle size may be determined by plotting a cumulative distribution curve representing the percentage of particles below chosen particle sizes.

It is preferred than none of the filler particles incorporated into the film substrate according to this invention should have an actual particle size exceeding 30 µm. Particles exceeding such a size may be removed by sieving processes which are known in the art. However, sieving operations are not always totally successful in eliminating all particles greater than a chosen size. In practice, therefore, the size of 99.9% by number of the particles should not exceed 30 µm. Most preferably the size of 99.9% of the particles should not exceed 20 µm.

Incorporation of the opacifying/voiding agent into the polymer substrate may be effected by conventional techniques - for example, by mixing with the monomeric reactants from which the polymer is derived, or by dry blending with the polymer in granular or chip form prior to formation of a film therefrom.

The amount of filler, particularly of barium sulphate, incorporated into the substrate polymer desirably should be not less than 5% nor exceed 50% by weight, based on the weight of the polymer. Particularly satisfactory levels of opacity and gloss are achieved when the concentration of filler is from about 8 to 30%,

and especially from 15 to 20%, by weight, based on the weight of the substrate polymer.

One or more of the layers of a polymeric film according to the invention may conveniently contain any of the additives conventionally employed in the manufacture of polymeric films. Thus, agents such as dyes, pigments, voiding agents, lubricants, anti-oxidants, anti-blocking agents, surface active agents, slip aids, gloss-improvers, prodegradants, ultra-violet light stabilisers, viscosity modifiers and dispersion stabilisers may be incorporated in the substrate and/or antistatic adherent layer as appropriate. The substrate layer may comprise for example, china clay preferably incorporated in amounts of up to 25% to promote voiding, optical brighteners in amounts up to 1500 parts per million to promote whiteness, and dyestuffs in amounts of up to 10 parts per million to modify colour, the specified concentrations being by weight, based on the weight of the substrate polymer. In particular, an adherent layer may comprise a particulate filler, such as silica, of small particle size. Desirably, a filler, if employed in an antistatic adherent layer, should be present in an amount of not exceeding 50% by weight of polymeric material, and the particle size thereof should not exceed 0.5 $\mu$m, preferably less than 0.3 $\mu$m, and especially from 0.005 to 0.2 $\mu$m.

The substrate thickness may vary depending on the envisaged application of the primed film but, in general, is suitably in a range from 12 to 300, particularly from 50 to 250, and especially from 150 to 250 $\mu$m.

The adherent composition may be applied to an already oriented film substrate - such as a polyimide film. However, application of the composition is preferably effected before or during the stretching operation.

In particular, it is preferred that the adherent composition should be applied to the film substrate between the two stages (longitudinal and transverse) of a thermoplastics film biaxial stretching operation. Such a sequence of stretching and coating is especially preferred for the production of a coated linear polyester film substrate, such as a coated polyethylene terephthalate film, which is preferably firstly stretched in the longitudinal direction over a series of rotating rollers, coated with the antistatic adherent layer, and then stretched transversely in a stenter oven, preferably followed by heat setting.

Prior to deposition of the adherent composition onto the polymeric substrate the exposed surface thereof may, if desired, be subjected to a chemical or physical surface-modifying treatment to improve the bond between that surface and the subsequently applied antistatic adherent layer. A preferred treatment, because of its simplicity and effectiveness, which is particularly suitable for the treatment of a polyolefin substrate, is to subject the exposed surface of the substrate to a high voltage electrical stress accompanied by corona discharge. Alternatively, the substrate may be pretreated with an agent known in the art to have a solvent or swelling action on the substrate polymer. Examples of such agents, which are particularly suitable for the treatment of a polyester substrate, include a halogenated phenol dissolved in a common organic solvent eg a solution of p-chloro-m-cresol, 2,4-dichlorophenol, 2,4,5- or 2,4,6- trichlorophenol or 4-chlororesorcinol in acetone or methanol.

An adherent layer may be applied to one or each surface of the polymeric substrate. Alternatively, one surface of the substrate may be uncoated, or may be coated with a layer of a material other than the herein specified antistatic adherent composition.

Modification of the surface of the adherent layer, eg by flame treatment, ion bombardment, electron beam treatment, ultra-violet light treatment or preferably by corona discharge, may improve the adhesion of subsequently applied coatings, inks and lacquers, but may not be essential to the provision of satisfactory adhesion.

The preferred treatment by corona discharge may be effected in air at atmospheric pressure with conventional equipment using a high frequency, high voltage generator, preferably having a power output of from 1 to 20 kw at a potential of 1 to 100 kv. Discharge is conveniently accomplished by passing the film over a dielectric support roller at the discharge station at a linear speed preferably of 1.0 to 500 m per minute. The discharge electrodes may be positioned 0.1 to 10.0 mm from the moving film surface.

Satisfactory adhesion of a range of coating materials applied directly to the surface of the adherent layer can however be achieved without any prior surface modification, eg by corona discharge treatment.

The ratio of substrate to adherent layer thickness may vary within a wide range, although the thickness of the adherent layer preferably should not be less than 0.004% nor greater than 10% of that of the substrate. In practice, the thickness of the adherent layer is desirably at least 0.01 $\mu$m and preferably should not greatly exceed about 1.0 $\mu$m.

The adherent layer coated films of the present invention have excellent handling properties on account of the antistatic properties provided by the coated layer, and are suitable for continuous feeding through automatic film handling machinery. The coatings also exhibit strong adhesion to the polymeric base film, and to additional coatings superimposed thereon.

Primed polymeric films of the present invention can be used to form various types of composite

structures by coating or laminating additional materials onto the primed substrate film, particularly magnetic cards which preferably comprise, in order, (i) a magnetic layer, (ii) an adherent layer comprising (a) a polyurethane resin which is the reaction product of (i) a polyfunctional organic isocyanate and (ii) a polymeric polyol, and (b) at least one phosphate ester of the formula:

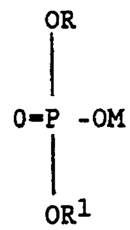

wherein

R is an unreactive hydrocarbon radical optionally containing unreactive substituents and having a total of not more than 10 carbon atoms;

$R^1$ is an unreactive hydrocarbon radical optionally containing unreactive substituents and having a total of not more than 10 carbon atoms or is alkali metal, ammonium, an amine cation, or hydrogen; and

M is alkali metal, ammonium, an amine cation, or hydrogen, (iii) a polymeric film substrate layer, (iv) an adherent layer as defined in (ii) above, and (v) a graphics layer.

A range of conventional binders may be used for the magnetic coating materials, which are well-known to the man skilled in the art. A wide range of inks and lacquers may be used in the graphics layer, such as aqueous and organic solvent-based materials, particularly electron beam- and UV-curable inks. Suitable UV-curable inks are used in the Examples below.

The primed polymeric films can be coated with a range of other materials, for example acrylic coatings, cellulose acetate butyrate lacquer, and diazonium coatings for drawing office applications.

The invention is illustrated by reference to the accompanying drawings in which :

Figure 1 is a schematic sectional elevation, not to scale, of a polymeric film having an adherent layer adhered to each surface thereof.

Figure 2 is a similar schematic elevation of a polymeric film with a graphics layer bonded to a first adherent layer.

Figure 3 is a similar schematic elevation of a polymeric film with a magnetic layer bonded to a second adherent layer.

Referring to Figure 1 of the drawings, the film comprises a polymeric substrate layer (1) having two adherent layers (2 and 3), one such adherent layer being bonded respectively to each of surfaces (4 and 5) there4of.

The film of Figure 2 further comprises an additional graphics layer (6) bonded to the remote surface (7) of the first adherent layer (2).

The film of Figure 3 further comprises an additional magnetic layer (8) bonded to the remote surface (9) of the second adherent layer (3), and is an example of a magnetic card.

The invention is further illustrated by reference to the following Examples, wherein the material identified as "ELFUGIN AKT" (supplied by Sandoz Products Limited), by applicant's analysis contains a mixture by weight of approximately 40% dibutyl phosphate ester, 8.5% monobutyl phosphate ester, 10% monobutyl poly(8)ethylene glycol, monooleyl poly(8)ethylene glycol phosphate ester, 1.5% n-butanol and 40% water. The material identified as "AP 70" (supplied by Dainippom Ink Corporation, Japan), by applicant's analysis is a polyurethane resin comprising residues of terephthalic acid, isophthalic acid, adipic acid, ethylene glycol, diethylene glycol, neopentyl glycol and hexamethylene diisocyanate.

Example 1

An antistatic adherent coating composition was formed from the following components:

| | |
|---|---|
| Elfugin AKT (55% w/v) | 113 ml |
| AP 70 (35% w/v) | 179 ml |
| 'Synperonic' NP10 (10% w/w aqueous solution of an ethoxylated nonyl phenol, supplied by ICI) | 15 ml |
| Demineralised water | to 2500 ml |

An amorphous polyethylene terephthalate film (containing by weight relative to polyethylene terephthalate - 7.5% particulate barium sulphate, 7.5% particulate china clay and 0.6% particulate titanium dioxide) was stretched to about 3.2 times its original dimensions in one direction and coated on both surfaces with the above formulation. The adherent layer coated film was passed into a stenter oven, where the film was dried and stretched in the sideways direction to approximately 3.5 times its original dimensions. The biaxially stretched coated film was heat set at a temperature of about 220°C by conventional means. Final film thickness was 188 µm, and the dry coat weight of each antistatic adherent layer was approximately 0.7 $mgdm^{-2}$.

The antistatic properties of the coated polymeric film were determined by measuring the surface resistivity (SR) at 30 to 70% relative humidity. A SR not exceeding 12.0, preferably less than 10.5 log ohm/square at greater than 50% relative humidity gives acceptable antistatic properties. The results are given in Table 1.

Ink adhesion to the coated film was determined using three commercially available standard ultra-violet (UV) light cured inks ("Toyo Yellow", "Morohoshi Yellow", and "Morohoshi Black"). The ink was applied to the film to a depth of approximately 2 µm, using a Duncan Lynch machine, and passed through a UV lamp machine (lamp power 300 watts/inch) in less than one second (typically 0.75 seconds). The cured sample was cross-hatched, a piece of Sellotape adhesive tape applied by rubbing down to exclude air bubbles, and the Sellotape adhesive tape rapidly and vigorously removed. The amount of ink remaining after the cross-hatch test is expressed as a percentage of the original ie 100% is excellent adhesion. The results are given in Table 1.

The adhesion of a magnetic layer to the coated film was determined by applying a magnetic layer to the coated film, drying the layer and testing the adhesion by using a standard cross-hatch test. The magnetic layer exhibited very good adhesion to the coated film.

Example 2

This is a comparative Example not according to the invention. The procedure in Example 1 was repeated except that the polyethylene terephthalate film was not coated with an adherent layer. The SR and ink adhesion results are given in Table 1.

Example 3

This is a comparative Example not according to the invention. The procedure in Example 1 was repeated except that the coating composition did not contain any AP 70. The amount of Elfugin AKT in the coating composition was correspondingly increased in order that the overall solids content remained the same. The SR and ink adhesion results are given in Table 1.

Example 4

This is a comparative Example not according to the invention. The procedure in Example 1 was repeated except that the coating composition did not contain any Elfugin AKT. The amount of AP 70 in the coating composition was correspondingly increased in order that the overall solids content remained the same. The SR and ink adhesion results are given in Table 1.

The above examples illustrate the improved properties of adherent layer coated films of the present

invention.

TABLE 1

| | EXAMPLE 1 | EXAMPLE 2 (Comparative) | EXAMPLE 3 (Comparative) | EXAMPLE 4 (Comparative) |
|---|---|---|---|---|
| SURFACE RESISTIVITY (% relative humidity) | | | | |
| 30 | 13.9 | 19.6 | * | 19.6 |
| 40 | 11.3 | 19.6 | 10.1 | 19.6 |
| 50 | 9.4 | 19.6 | 8.9 | 19.6 |
| 60 | 9.2 | 19.6 | 8.5 | 19.6 |
| 70 | 8.9 | 19.6 | 8.3 | 19.6 |
| UV INK ADHESION (% ink remaining) | | | | |
| Toyo Yellow | 100 | 0 | 0 | 100 |
| Morohoshi Yellow | 100 | 30 | 0 | 100 |
| Morohoshi Black | 100 | 0 | 0 | 100 |

* Not tested

## Claims

1. A primed film comprising a polymeric film substrate layer having on at least one surface thereof an adherent layer comprising (a) a polyurethane resin which is the reaction product of (i) a polyfunctional organic isocyanate and (ii) a polymeric polyol, and (b) at least one phosphate ester of the formula:

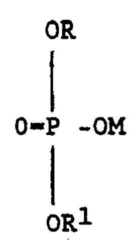

wherein

R is an unreactive hydrocarbon radical optionally containing unreactive substituents and having a total of not more than 10 carbon atoms;

$R^1$ is an unreactive hydrocarbon radical optionally containing unreactive substituents and having a total of not more than 10 carbon atoms or is alkali metal, ammonium, an amine cation, or hydrogen;

and

M is alkali metal, ammonium, an amine cation, or hydrogen.

**2.** A primed film according to claim 1 wherein R and $R^1$ of component (b) of the adherent layer are selected from ethyl, n-propyl, iso-propyl, n-butyl, iso-butyl and tert-butyl.

**3.** A primed film according to either of claims 1 and 2 wherein the phosphate ester of component (b) comprises a salt of dibutyl hydrogen phosphate, butyl dihydrogen phosphate or a mixture thereof.

**4.** A primed film according to any one of the preceding claims wherein the polymeric polyol of component (a) of the adherent layer comprises a polyester.

**5.** A primed film according to claim 4 wherein the polyester comprises residues of terephthalic acid and isophthalic acid.

**6.** A primed film according to any one of the previous claims wherein the polyurethane resin of component (a) comprises a polyfunctional active hydrogen-containing chain extender.

**7.** A primed film according to any one of the preceding claims wherein the adherent layer is at least partially cross-linked.

**8.** A primed film according to any one of the preceding claims wherein the polymeric film substrate comprises biaxially oriented polyethylene terephthalate.

**9.** A method of producing a primed film by forming a substrate layer of polymeric material, and applying to at least one surface thereof an adherent layer comprising (a) a polyurethane resin which is the reaction product of (i) a polyfunctional organic isocyanate and (ii) a polymeric polyol, and (b) at least one phosphate ester of the formula:

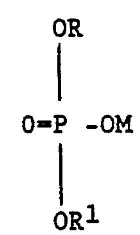

wherein

R is an unreactive hydrocarbon radical optionally containing unreactive substituents and having a total of not more than 10 carbon atoms;

$R^1$ is an unreactive hydrocarbon radical optionally containing unreactive substituents and having a total of not more than 10 carbon atoms or is alkali metal, ammonium, an amine cation, or hydrogen; and

M is alkali metal, ammonium, an amine cation, or hydrogen.

**10.** A magnetic card comprising a primed film according to any one one of claims 1 to 8, or produced according to claim 9, associated with a magnetic layer and a graphics layer.

Fig. 1

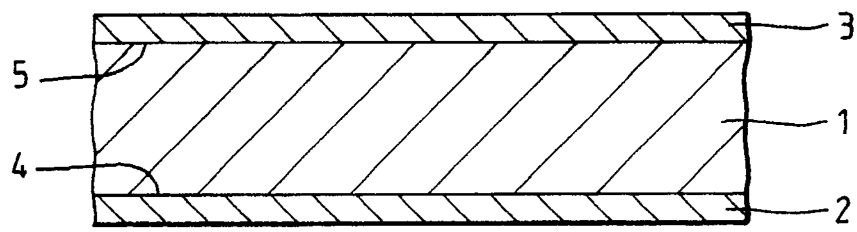


Fig. 2

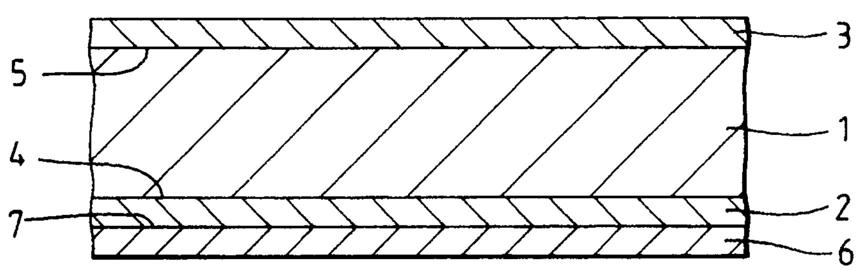


Fig. 3

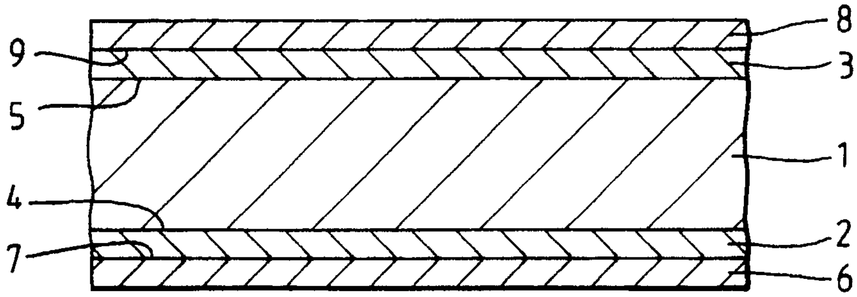

European Patent Office

# EUROPEAN SEARCH REPORT

Application Number

**EP 91 30 0274**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 154 827 (VICTOR CO. OF JAPAN)<br>* Claims 1-3,7,8; page 7, lines 18-24; page 9, lines 13-19; page 10, lines 3-6 *<br>– – – | 1,4,6,9,10 | C 09 D 175/04<br>C 08 J 7/04<br>C 09 D 7/12<br>G 11 B 5/704 //<br>C 08 K 5/521 |
| A | EP-A-0 143 337 (SONY CORP.)<br>* Abstract *<br>– – – – – | 1,10 | |

| TECHNICAL FIELDS SEARCHED (Int. Cl.5) |
|---|
| C 08 J<br>C 08 G<br>C 08 K<br>C 09 D<br>G 11 B |

The present search report has been drawn up for all claims

| Place of search | Date of completion of search | Examiner |
|---|---|---|
| The Hague | 13 May 91 | GOERKE H.R. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document